# EUROPÄISCHE PATENTSCHRIFT

(11) **EP 0 636 801 B1**
(45) Veröffentlichungstag und Bekanntmachung des Hinweises auf die Patenterteilung: **26.08.1998**
(21) Anmeldenummer: 94106015.4
(22) Anmeldetag: 18.04.1994
(51) Int. Cl.: F16B 39/38

(54) **Sicherungsmutter**
Lock nut
Ecrou de blocage

(30) Priorität: 27.04.1993 DE 4313845
(43) Veröffentlichungstag der Anmeldung: 01.02.1995
(73) Patentinhaber: FLAIG UND HOMMEL GmbH & Co. KG, Handels- und Besitzgesellschaft, D-78554 Aldingen/Württ. (DE)
(72) Erfinder: Flaig, Christian, D-78554 Aldingen/Württ (DE)
(74) Vertreter: Liesegang, Roland, Dr.-Ing.

(56) Entgegenhaltungen:
- DE-A- 2 638 560
- FR-A- 850 800
- US-A- 2 439 253

## Beschreibung

Die Erfindung betrifft eine Sicherungsmutter nach dem Oberbegriff von Patentanspruch 1. Eine solche Sicherungsmutter ist aus der DE-PS 26 38 560 bekannt.

Bei einer anderen bekannten Sicherungsmutter mit einem Gewindeabschnitt mit Innengewinde, einer sich daran anschließenden inneren Ringnut und einer Ringscheibe, die in Umfangsrichtung reibschlüssig in der Ringnut gehalten ist, wobei arm inneren Umfang der Ringscheibe ein dem Innengwinde des Gewindeabschnitts entsprechendes Innengewinde eingeschmitten ist (FR-A-850 800), hat die Ringscheibe eine solche Abmessungen, daß sie praktisch nicht federnd nachgeben kann. Die Ringscheibe hat hier deshalb die Wirkung einer starren Gegenmutter.

Aus der US-A-2 439 253 ist eine Sicherungsmutter mit eingelegter federnder Ringscheibe bekannt, deren Fedrigkeit durch Aussparungen am Umfang und dazwischen angeordnete Klauen erhöht ist, die in eine Innennut am Kopf der Sicherungsmutter eingreifen. Die Ringscheibe, die sehr geringe Stärke und kein Innengewinde hat, greift gleichwohl mit ihrem inneren Umfangsbereich in einen Teilabschnitt eines Gewindeganges des Bolzens ein.

Eine Sicherungsmutter ist eine Gewindemutter, die auf einem Gewindebolzen gegen selbsttätiges Lösen gesichert ist, sofern der Bolzen die gesamte Mutter axial durchsetzt. Die aus der DE-PS 26 38 560 bekannte Sicherungsmutter weist ausgezeichnete Sicherungseigenschaften auf und hat sich deshalb auf dem Markt durchgesetzt. Die Ringscheibe ist mit ihrem äußeren Umfangsbereich in einer an das Muttergewinde anschließende Ringnut eingesetzt, und durch eine axiale Verschiebung des inneren Bereiches der Ringscheibe ist das Innengewinde der Ringscheibe gegenüber dem der Mutter geringfügig versetzt. Durch die Wahl des Betrages des Gewindeversatzes zwischen Muttergewinde und Scheibengewinde kann die Sperrwirkung der Sicherungsmutter eingestellt werden. Dabei ist wesentlich, daß die nur in ihrem äußeren Umfangsbereich eingespannte Scheibe in ihrem wirksamen inneren Bereich in axialer Richtung eine gewisse Elastizität aufweist, wodurch das Einschrauben eines Bolzens ermöglicht und der eingeschraubte Bolzen festgehalten wird. Bei zahlreichen Anwendungen, etwa für bestimmte Muttergrößen oder bei extremen Temperaturbelastungen, wäre jedoch eine noch größere Elastizität der Ringscheibe erwünscht. Für den Fachmann hierzu naheliegende Maßnahmen wären eine Vergrößerung der Aussparungen, eine Verminderung der Scheibendicke und/oder die Wahl eines elastischeren Scheibenmaterials der Ringscheibe. Nach den Feststellungen der Anmelderin führen jedoch diese Maßnahmen zwar zu der erwünschten Erhöhung der Elastizität, andererseits jedoch zu einer Verminderung der Sicherungseigenschaften der Mutter.

Aufgabe der Erfindung ist daher, die Sicherungsmutter der eingangs erwähnten Art bezüglich der Elastizität und der Rückstellwirkung ihrer Ringscheibe zu verbessern, ohne dabei jedoch die Sicherungsqualität zu beeinträchtigen. Diese Aufgabe wird erfindungsgemäß durch eine Sicherungsmutter mit den Merkmalen der Patentansprüche 1 oder 2 gelöst.

Die Erfindung sieht also eine Sicherungsmutter vor, bei der gleichmäßig über den Umfang einer in die Sicherungsmutter eingesetzten Ringscheibe mehrere Aussparungen eingeformt sind, wobei zwischen den Aussparungen radial vorspringende Klauen ausgebildet sind, deren Umfangsabmessungen geringer sind als die Umfangsabmessungen der Aussparungen. Die erfindungsgemäße Gestaltung der Ringscheibe weist gegenüber der bekannten Form aufgrund der Kerben oder der Nuten/Abflachungen in den Klauen eine bessere Fedrigkeit auf. Durch das "Einkrallen" der vorspringenden Klauen in die Ringnut ist ferner eine bessere Verdrehsicherheit der Ringscheibe gegenüber der Mutter gegeben.

Gemäß einer vorteilhaften Ausgestaltung der Erfindung nimmt die radiale Breite der Ringscheibenabschnitte bei den Aussparungen ausgehend von ihren Ansätzen an den Klauen in Umfangsrichtung gesehen bis zur Mitte der Aussparungen hin ab, wodurch die Elastizität der Ringscheibe weiter erhöht wird und Soll-Knickbereiche oder Soll-Verformungsbereiche minimaler Breite jeweils zwischen zwei Klauen geschaffen werden, an denen die Ringscheibe bevorzugt nachgibt, wenn axiale Kräfte auf den Innenbereich der Ringscheibe einwirken.

Bei einer weiteren vorteilhaften Ausgestaltung der Erfindung ist die Tiefe der Kerben nicht größer als die maximale radiale Tiefe einer Aussparung. Dadurch wird einerseits ein durchgehender Innenringbereich der Ringscheibe gewährleistet, der für die erforderliche Stabilität sorgt, andererseits wird die Elastizität weiter verbessert.

Als vorteilhaft hat sich eine Ringscheibe mit drei gleichmäßig über ihren Umfang verteilten segmentartigen Aussparungen oder Aussparungen in Form von Teilkreisbahnen erwiesen, wobei sich die Aussparungen jeweils über etwa ein Sechstel des Ringscheibenumfangs erstrecken, und wobei in jede der zwischen diesen Aussparungen verbleibenden Klauen eine Kerbe mit parallelen Seitenwänden eingeformt ist, deren maximale Tiefe nicht größer als die maximale Tiefe einer Aussparung ist. Es können auch mehr als drei Klauen vorgesehen sein.

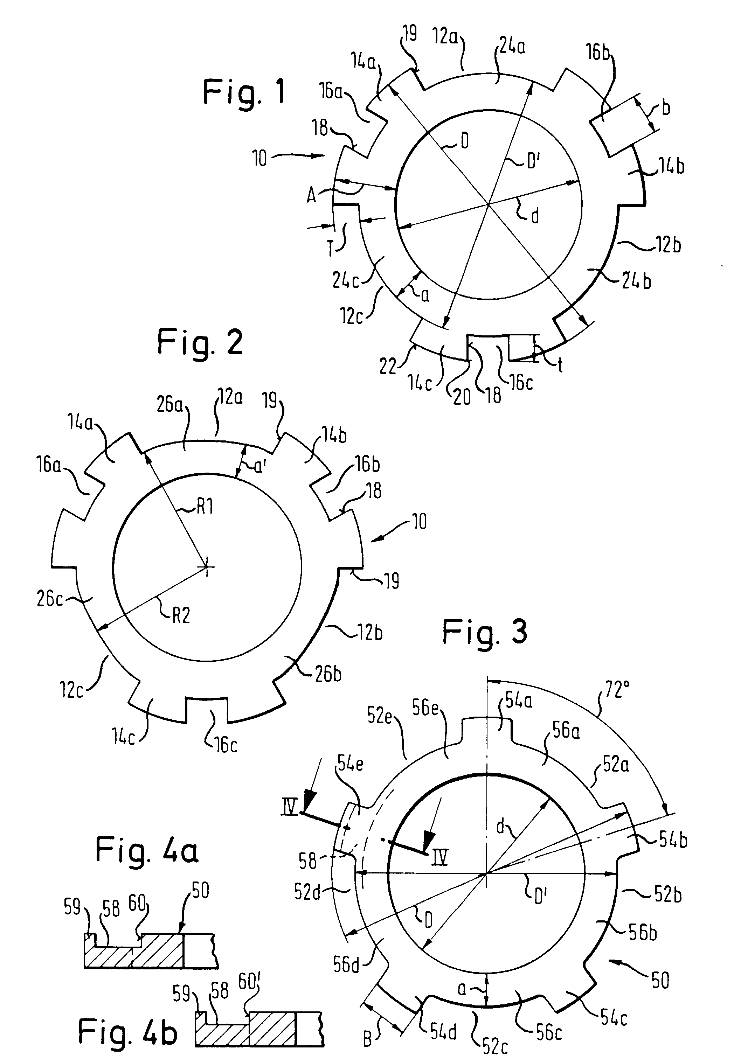

Die Erfindung ist im folgenden anhand bevorzugter Ausführungsformen mit Bezug auf die Zeichnung näher erläutert. Es zeigen:
- Fig. 1: eine erste Ausführung einer Ringscheibe zum Einsatz in einer erfindungsgemäßen Sicherungsmutter in Draufsicht;
- Fig. 2: eine zweite Ausführungsform einer Ringscheibe in Draufsicht;
- Fig. 3: eine dritte Ausführung einer Ringscheibe in Draufsicht;
- Fig. 4a und 4b: Teilabschntte nach der Linie IV - IV in Fig. 3 durch abgewandelte Ausführungen der Ringscheibe gemäß Fig. 3;
- Fig. 5: einen Schnitt durch einen Sicherungsmutter-Rohling mit einer eingelegten Ringscheibe gemäß Fig. 3;
- Fig. 6: einen Schnitt wie Fig. 5 längs der Linie VI -VI in Fig. 7 durch eine Sicherungsmutter in fertigmontiertem Zustand und
- Fig.7: eine Draufsicht auf die fertige Sicherungsmutter nach Fig. 6.
Bei einer ersten Ausführung der Erfindung, die in Fig. 1 gezeigt ist, sind in eine Ringscheibe 10 drei um 120° versetzte Aussparungen 12a, 12b, 12c in Form von Teilkreisbahnen gleichförmigen radialen Abstandes a eingeformt, so daß Ringabschnitte 24a, 24b, 24c mit in Umfangsrichtung gleichförmiger radialer Breite a stehenbleiben. In zwischen diesen Teilkreisbahnen 12a, 12b, 12c verbleibende, radial vorspringende Klauen 14a, 14b, 14c sind jeweils mittig um 120° versetzte, im wesentlichen rechteckige Kerben 16a, 16b, 16c eingebracht, wobei die radiale Tiefe t der Kerben 16a, 16b, 16c ungefähr gleich der radialen Tiefe T der Aussparungen 12a, 12b, 12c ist.

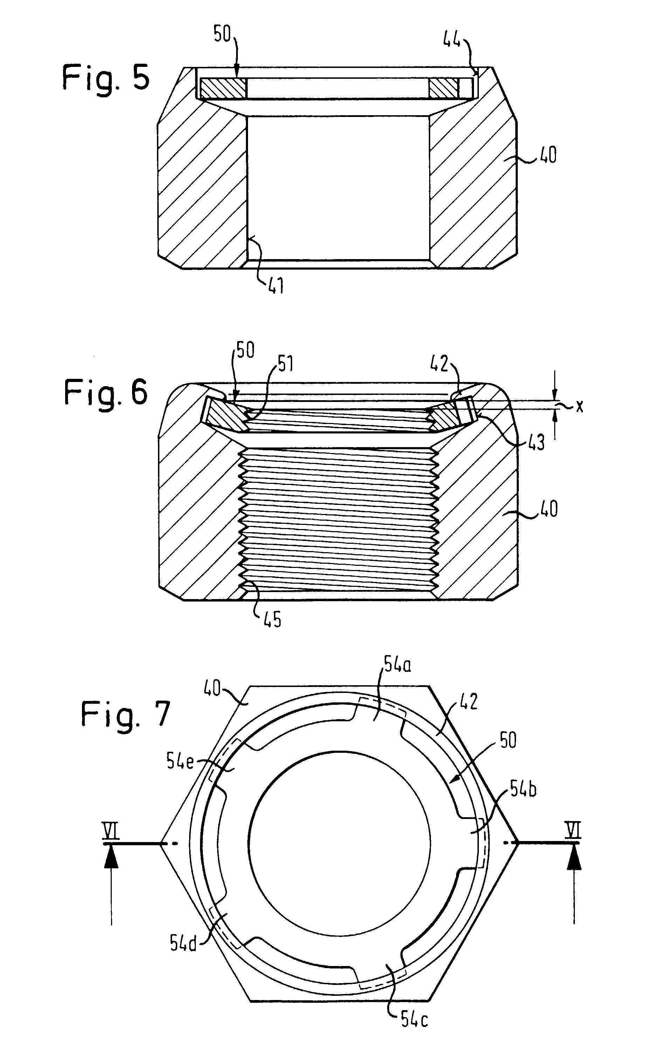

Die radiale Tiefe T der Aussparungen 12a, 12b, 12c ist ungefähr gleich einem Drittel der maximalen radialen Breite A des Sicherungsringes 10. Die Umfangserstreckung einer Aussparung 12a, 12b, 12c entspricht ungefähr einem Sechstel des Ringscheibenumfangs, und die Länge einer in eine der Klauen 14a, 14b, 14c eingeformten Kerbe 16a, 16b, 16c in Umfangsrichtung beträgt etwa ein Achtzehntel des Ringscheibenumfangs. Die zueinander parallelen Seitenwände 18 der Kerben 16a, 16b, 16c sind bei diesem Ausführungsbeispiel nicht genau radial in die Klauen 14a, 14b, 14c eingebracht, sondern sie weichen um einen gewissen Winkel, beispielsweise 10°, von der radialen Ausrichtung ab, so daß die Ecke 20 einer Kerbe zwischen Seitenwand 18 und dem Ringscheibenumfang 22 einen spitzen Winkel, beispielsweise 80° bildet. Der Innendurchmesser d der Ringscheibe 10 entspricht in etwa dem Innendurchmesser der gewindefreien Bohrung 41 des Mutterrohlings, und der Außendurchmesser D entspricht in etwa dem Innendurchmesser der Ringnut 43 zur Aufnahme der Ringscheibe in der Mutter (s. Fig. 5, 6).

Durch die beschriebene Ausgestaltung der Ringscheibe 10 wird erreicht, daß diese im Bereich ihrer durch die Kerben 16a, 16b, 16c geteilten Klauen 14a, 14b, 14c besonders elastisch ist. Andererseits gewährleistet der verbleibende durchgehende innere Ringbereich 24, der frei von Aussparungen und Kerben ist, die erforderliche Stabilität der Ringscheibe 10. Die Breite b der Kerben 16a, 16b, 16c liegt vorzugsweise im Bereich von einem Viertel bis einem Drittel der Umfangserstreckung der Klauen 14a, 14b, 14c.

Fig. 2 zeigt eine weitere Ausführungsform der Ringscheibe 10. Entsprechende Bestandteile der Ringscheibe 10 sind mit denselben Bezugszeichen gekennzeichnet. Der einzige Unterschied zwischen der Ringscheibe 10 von Fig. 2 zu der in Fig. 1 gezeigten Ringscheibe ist, daß die Ringabschnitte 26a, 26b, 26c ausgehend von ihren Ansätzen an den Klauen 14a, 14b, 14c in Umfangsrichtung gesehen bis zu ihrer Mitte hin eine abnehmende radiale Breite a' haben; d.h., R1 > R2. Die Ringabschnitte 26a, 26b, 26c weisen also einen "weicheren" mittleren Bereich auf, in dem bei axialer Verdrückung oder Verschiebung der Ringscheibe 10 eine Verformung mit größerer Wahrscheinlichkeit auftritt als in anderen Bereichen der Ringscheibe 10. Diese Konfiguration wird bei der Herstellung der Sicherungsmutter gezielt eingesetzt, um eine über ihren Umfang möglichst gleichmäßig verformte und dadurch gleichmäßig wirkende Ringscheibe zu erhalten, wie anhand der Fig. 6 noch erläutert.

Fig. 3 zeigt eine dritte Ausführung der Ringscheibe, die hier mit der Bezugszahl 50 bezeichnet ist. Die Ringscheibe 50 mit Außendurchmesser D und Innendurchmesser d weist fünf segmentartige Aussparungen 52a bis 52e auf. Zwischen diesen Aussparungen ragen schmale, kerbenfreie Klauen 54a bis 54e radial vor. Die Breite B dieser Klauen in Umfangsrichtung beträgt etwa ein Drittel der Umfangslänge der zwischen den Klauen befindlichen Ringabschnitte 56a bis 56e, welche wie bei der Ausführung nach Fig.1 über den Umfang gleichbleibende radiale Breite a haben.

Bei den Abwandlungen nach den Figuren 4a und 4b, die in Fig. 3 gestrichelt angedeutet sind, ist in die Klauen 54a bis 54e eine Nut 58 eingearbeitet oder eingedrückt, welche die Klauen noch nachgiebiger macht. Wenngleich am freien Klauenende ein Steg 59 stehengelassen ist, könnte die Klaue auch durchgehend plan abgearbeitet sein. Der in Falle einer Nut 58 stehenbleibende Steg verbessert jedoch die Krallwirkung der Klaue in montiertem Zustand gemäß Fig. 6 in der Nut 43 der Sicherungsmutter. Im Falle der Fig. 4a ist zusätzlich noch Material von den Ringabschnitten 52a bis 52e weggenommen.

Bei den Ausführungen nach den Figuren 1 bis 3 liegt die maximale radiale Tiefe T der Aussparungen 12a bis 12c bzw. 52a bis 52e vorzugsweise bei einem Drittel der maximalen radialen Breite A der Ringscheibe 10. Die Breite b der Kerben 16a bis 16c liegt bei den Ausführungen nach Fig. 1 und 2 vorzugsweise im Bereich zwischen einem Viertel und einem Drittel der gesamten Umfangserstreckung einer Klaue.

Bei allen Ausführungsformen können die Aussparungen und Kerben bei der Herstellung der Ringscheibe 10, 50 in diese eingeformt werden, z.B. durch Stanzen. Die Ringscheibe 10, 50 besitzt eine Dicke etwa entsprechend der Gewindesteigung des Muttergewindes; d.h., die Scheibendicke wird durch die Gewindesteigung bestimmt, wobei mindestens ein vollständiger Gewindegang in die Ringscheibe einformbar sein muß. Die Ringscheibe wird vorzugsweise aus Federbandstahl gefertigt.

Aus Fig. 5 bis 7 ist ersichtlich, wie eine erfindungsgemäße Sicherungsmutter mit der Ringscheibe 50 nach Fig. 3 hergestellt werden kann. Gemäß den Fig. 5 bis 7 besitzt der Körper 40 einer Sechskantmutter an seinem Ende einen konzentrischen Halsfortsatz 42, dessen Innenrand gegenüber dem Muttergewinde nach außen versetzt ist und eine Ansenkung 44 bildet. In diese Ansenkung 44 ist eine Ringscheibe 50 eingelegt, von deren Umfang, wie insbesondere aus Fig. 7 ersichtlich ist, die Klauen 54a bis 54e abstehen und sich symmetrisch auf der Innenseite des Halsfortsatzes 42 abstützen. Die Herstellung des in Fig. 5 gezeigten Mutterrohlings, welcher in der ersten Herstellungsstufe noch kein Gewinde aufweist, kann auf dem Fachmann geläufige Weise erfolgen.

Fig. 6 zeigt dann, daß der Halsfortsatz 42 an seinem oberen Ende durch Umbördeln eingezogen wird, so daß die Ringscheibe 50 nun in der auf diese Weise entstandenen Nut 43 axial unverschieblich gehalten ist. Nach dieser Festlegung der Ringscheibe 50 wird mit einem üblichen Werkzeug ein Gewinde 45 in den Mutterkörper 40 eingeschnitten. Da die Ringscheibe 50 im wesentlichen denselben Innendurchmesser aufweist wie der Mutterkörper 40, schneidet dabei zwangsläufig das Werkzeug auch in die innere Randkante der Ringscheibe 50 ein dem Muttergewinde 45 entsprechendes Gewinde 51 ein. Darauf wird mittels eines Druckstempels oder dergleichen der innere Bereich der Ringscheibe 50 in Richtung zum Muttergewinde um einen Weg x hin verdrückt, so daß die Ringscheibe 50, wie am besten aus Fig. 6 ersichtlich, eine Wölbung erhält. Dadurch werden das Muttergewinde 45 und das Innengewinde 51 der Ringscheibe gegeneinander axial versetzt. Die Verdrückung der Scheibe sollte etwa einem Viertel bis zur Hälfte der Gewindesteigung entsprechen, so daß der axiale Versatz x der beiden Gewinde 45, 51 zueinander zwischen einem Viertel und der Hälfte eines Gewindeganges liegt.

Ein nicht gezeigter, in die Mutter 40 eingeschraubter Gewindebolzen wird dann allseitig von der Ringscheibe 50 festgeklemmt, wobei die Federkraft der Ringscheibe in axialer Richtung für die Klemmkraft maßgebend ist. Durch die erfindungsgemäße Gestaltung der Ringscheibe mit den Klauen und Kerben wird die Fedrigkeit und Elastizität der Ringscheibe gegenüber bekannten Ringscheiben weiter erhöht, ohne die Stabilität zu beeinträchtigen. Dadurch können einerseits höhere Klemmkräfte erzielt werden, andererseits ist noch mehr als zuvor gewährleistet, daß die Sicherungsmutter auch bei einer mehrmaligen Verwendung ihre ursprüngliche Elastizität und dadurch ihre Brauchbarkeit behält. Besonders vorteilhaft ist auch die scharfkantige bzw. spitzwinklige Ausbildung der Klauenkanten, die zusätzlich ein Verdrehen der Ringscheibe beim Einschrauben eines Gewindebolzens verhindern, weil diese Klauen sich in die durch den umgebogenen Gewindehals gebildete Nut einkrallen. Dies gilt insbesondere für eine Ausführung nach Fig. 4a oder 4b mit dem Steg 59 am freien Klauenende.

Selbstverständlich ist die Erfindung nicht auf die dargestellten Ausführungsbeispiele begrenzt, insbesondere was die Anzahl, die Form und die Breite der Aussparungen, Kerben und Klauen betrifft.

## Patentansprüche

1. Sicherungsmutter mit einem Gewindeabschnitt mit Innengewinde, einer sich daran anschließenden inneren Ringnut (43) und einer Ringscheibe (10; 50), die in Umfangsrichtung reibschlüssig in der Ringnut gehalten ist, wobei am inneren Umfang der Ringscheibe ein dem Innengewinde (45) des Gewindeabschnitts entsprechendes Innengewinde (51) eingeschnitten ist und das Innengewinde der Ringscheibe durch axiales Verformen in konusförmige Gestalt gegenüber dem Innengewinde der Sicherungsmutter um eine Strecke (x) versetzt ist, die kleiner als eine Gewindesteigung ist, und wobei in den Umfang der Ringscheibe mehrere gleichmäßig über den Umfang der Ringscheibe verteilte Aussparungen (12a, 12b, 12c; 52a bis 52e) eingeformt sind, dadurch **gekennzeichnet ,** daß zwischen den Aussparungen radial vorspringende Klauen (14a, 14a, 14c; 54a bis 54e) gebildet sind, über welche die Ringscheibe (10,50) reibschlüssig in der Ringnut (43) gehalten ist, daß die Aussparungen (12a, 12b, 12c; 52a bis 52e) zwischen den Klauen mit dem verbleibenden Ringscheibenmaterial Ringabschnitte (24a, 24b, 24c; 26b, 26c; 56a bis 56e) mindestens gleicher Umfangsabmessungen wie die Klauen bilden, und daß in die Klauen (14a, 14b, 14c) Kerben (16a, 16b, 16c) eingeformt sind.

2. Sicherungsmutter nach dem Oberbegriff des Anspruchs 1, dadurch **gekennzeichnet,** daß zwischen den Aussparungen schmale, radial vorspringende, kerbenfreie Klauen (54a bis 54e) gebildet sind, über welche die Ringscheibe (50) reibschlüssig in der Ringnut (43) gehalten ist, daß die Aussparungen (52a bis 52e) zwischen den Klauen mit dem verbleibenden Ringscheibenmaterial Ringabschnitte (56a bis 56e) größerer Umfangsabmessungen als die Klauen bilden und daß die Klauen (54a bis 54e) mit einer Nut (58) oder Abflachung versehen sind.

3. Sicherungsmutter nach Anspruch 1 oder 2, dadurch **gekennzeichnet,** daß die Ringabschnitte (24a, 24b, 24c) über ihre Umfangserstreckung gleichbleibende radiale Breite (a) haben (Fig.1).

4. Sicherungsmutter nach Anspruch 1 oder 2, dadurch **gekennzeichnet,**daß die Ringabschnitte (26a, 26b, 26c) in Umfangsrichtung ausgehend von ihren Ansätzen an den Klauen (14a, 14b, 14c) bis zu ihrer Mitte hin abnehmende radiale Breite (a') haben (Fig. 2).

5. Sicherungsmutter nach einem der Ansprüche 1 bis 4, dadurch **gekennzeichnet,** daß drei Klauen (14a, 14b, 14c) am Umfang verteilt angeordnet sind.

6. Sicherungsmutter nach einem der Ansprüche 2 bis 4, dadurch **gekennzeichnet,** daß fünf Klauen am Umfang verteilt angeordnet sind.

7. Sicherungsmutter nach Anspruch 1, dadurch **gekennzeichnet,** daß die Tiefe (t) der Kerben (16a, 16b, 16c) im wesentlichen gleich der oder kleiner als die maximale radiale Tiefe (T) einer Aussparung (12a, 12b, 12c) ist.

8. Sicherungsmutter nach Anspruch 1 oder 7, dadurch **gekennzeichnet,** daß jede Kerbe (16a, 16b, 16c) ein lichtes Maß (b) zwischen ihren parallelen Seitenwänden (18) zwischen 1/3 und 1/4 der Umfangserstreckung einer Klaue hat.

9. Sicherungsmutter nach einem der vorangehenden Ansprüche, dadurch **gekennzeichnet,** daß die Dicke der Sicherung-Ringscheibe (10) einer Gewindesteigung des Innengewindes entspricht.

10. Sicherungsmutter nach einem der vorangehenden Ansprüche, dadurch **gekennzeichnet,** daß die maximale radiale Tiefe (T) der Aussparungen (12a, 12b, 12c) 1/2 bis 1/3 der maximalen radialen Breite (A) der Ringscheibe (10) ist.

11. Sicherungsmutter nach einem der vorangehenden Ansprüche, dadurch **gekennzeichnet,** daß die Einschnittränder (19) der Aussparungen im wesentlichen radial verlaufen.

12. Sicherungsmutter nach einem der vorangehenden Ansprüche, dadurch **gekennzeichnet,** daß die Klauen (54a bis 54c) über ihre gesamte Umfangserstreckung und mindestens über einen Teilbereich ihrer radialen Erstreckung abgearbeitet sind, um die Fedrigkeit zu erhöhen.

13. Sicherungsmutter nach einem der vorangehenden Ansprüche, dadurch **gekennzeichnet,** daß die Sicherungs-Ringscheibe (10) aus Federmaterial, insbesondere Federbandstahl, besteht.

## Claims

1. A locknut with a screwthreaded portion having an internal screwthread, a following internal annular groove (43) and an annular washer (10; 50) which is held frictionally in the annular groove in the peripheral direction, an internal screwthread (51) corresponding to the internal screwthread (45) of the screwthreaded portion being cut at the inner periphery of the annular washer and the internal screwthread of the annular washer being offset relatively to the internal screwthread of the locknut, by axial deformation into a conical shape, the amount of the offset (x) being less than a screwthread pitch, and a plurality of recesses (12a, 12b, 12c; 52a to 52e) is formed in the periphery of the annular washer, being distributed uniformly thereover, characterised in that radially projecting claws (14a, 14a, 14c; 54a to 54e) are formed between the recesses, the annular washer (10, 50) being frictionally held in the annular groove (43) via said claws, in that the recesses (12a, 12b, 12c; 52a to 52e) between the claws co-operate with the remaining annular washer material to form ring portions (24a, 24b, 24c; 26b, 26c; 56a to 56e) of at least equal peripheral dimensions to the claws, and in that notches (16a, 16b, 16c) are formed in the claws (14a, 14b, 14c).

2. A locknut according to the preamble of claim 1, characterised in that narrow radially projecting notchfree claws (54a to 54e) are formed between the recesses, via which claws (54a to 54e) the annular washer (50) is held frictionally in the annular groove (43), in that the recesses (52a to 52e) between the claws together with the remaining annular washer material form ring portions (56a to 56e) of larger peripheral dimensions than the claws, and in that the claws (54a to 54e) are provided with a groove (58) or flat.

3. A locknut according to claim 1 or 2, characterised in that the ring portions (24a, 24b, 24c) have a constant radial width a over their peripheral extent (Fig. 1).

4. A locknut according to claim 1 or 2, chracterised in that the ring portions (26a, 26b, 26c) have a decreasing radial width a' in the peripheral direction starting from their points of attachment to the claws (14a, 14b, 14c) as far as their centre (Fig. 2).

5. A locknut according to any of claims 1 to 4, characterised in that three claws (14a, 14b, 14c) are distributed over the periphery.

6. A locknut according to any of claims 1 to 5, characterised in that five claws are distributed over the periphery.

7. A locknut according to claim 1, characterised in that the depth (t) of the notches (16a, 16b, 16c) is substantially equal to or smaller than the maximum radial depth (T) of a recess (12a, 12b, 12c).

8. A locknut according to claim 1 or 7, characterised in that each notch (16a, 16b, 16c) has a clearance (b) between its parallel side walls (18) of between one-third and one-quarter of the peripheral extent of a claw.

9. A locknut according to any one of the preceding claims, characterised in that the thickness of the locking annular washer (10) corresponds to one screwthread pitch of the internal screwthread.

10. A locknut according to any one of the preceding claims, characterised in that the maximum radial depth (T) of the recesses (12a, 12b, 12c) is one-half to one-third of the maximum radial width (A) of the annular washer (10).

11. A locknut according to any one of the preceding claims, characterised in that the incision edges (19) of the recesses extend substantially radially.

12. A locknut according to any one of the preceding claims, characterised in that the claws (54a to 54c) are thinned down over their entire peripheral extent and over at least a partial zone of their radial extent in order to increase the elasticity.

13. A locknut according to any one of the preceding claims, characterised in that the locknut annular washer (10) consists of spring material, more particularly spring band steel.

## Revendications

1. Écrou de blocage comportant une partie filetée à filetage interne, une gorge annulaire (43) s'y raccordant et une rondelle (10 ; 50) qui est maintenue fixe en rotation dans la gorge annulaire, la face interne de la rondelle comportant un filetage interne (51) correspondant au filetage interne (45) de ladite partie filetée et le filetage interne de la rondelle étant, par déformation axiale en forme de cône, décalé par rapport au filetage interne de l'écrou de blocage d'une distance (x) qui est plus petite que le pas de filetage, et plusieurs évidements (12a, 12b, 12c ; 52a à 52e) étant formés régulièrement à la périphérie de la rondelle, caractérisé en ce que des griffes en saillie radiale (14a, 14b, 14c ; 54a à 54e) sont formées entre les évidements, par l'intermédiaire desquels la rondelle (10 ; 50) est bloquée en rotation dans la gorge annulaire (43), en ce que les évidements (12a, 12b, 12c ; 52a à 52e) entre les griffes forment avec la matière restante de la rondelle des zones annulaires (24a, 24b, 24c ; 26b, 26c ; 56a à 56e) de dimension en circonférence au moins égale à celle des griffes, et en ce que les griffes (14a, 14b, 14c) comportent des rainures (16a, 16b, 16c).

2. Écrou de blocage selon le préambule de la revendication 1, caractérisé en ce que des griffes étroites (54a à 54e), sans rainure, sont formées en saillie radiale entre les évidements, par l'intermédiaire desquelles la rondelle (50) est bloquée en rotation dans la gorge annulaire (43), en ce que les évidements (52a à 52e) entre les griffes forment, avec la matière restante de la rondelle, des zones annulaires (56a à 56e) de dimension en circonférence supérieure à celle des griffes, et en ce que les griffes (54a à 54e) comportent une gorge (58) ou un aplatissement.

3. Écrou de blocage selon la revendication 1 ou 2, caractérisé en ce que les zones annulaires (24a, 24b, 24c) ont une dimension radiale (a) constante le long de leur direction circonférence (figure 1).

4. Écrou de blocage selon la revendication 1 ou 2, caractérisé en ce que les zones annulaires (26a, 26b, 26c) ont une dimension radiale (a') qui diminue en allant de leur raccordement aux griffes (14a, 14b, 14c) jusqu'à leur centre (figure 2).

5. Écrou de blocage selon l'une quelconque des revendications 1 à 4, caractérisé en ce que trois griffes (14a, 14b, 14c) sont réparties à la circonférence.

6. Écrou de blocage selon l'une quelconque des revendications 2 à 4, caractérisé en ce que cinq griffes sont réparties à la circonférence.

7. Écrou de blocage selon la revendication 1, caractérisé en ce que la profondeur (t) desdites rainures (16a, 16b, 16c) est essentiellement égale ou plus petite que la profondeur radiale maximale (T) d'un évidement (12a, 12b, 12c).

8. Écrou de blocage selon la revendication 1 ou 7, caractérisé en ce que chaque rainure (16a, 16b, 16c) a une distance (b) entre ses parois parallèles (18) comprise entre 1/3 et 1/4 de l'étendue circonférencielle d'une griffe.

9. Écrou de blocage selon l'une quelconque des revendications précédentes, caractérisé en ce que l'épaisseur de la rondelle de blocage (10) correspond au pas du filetage interne.

10. Écrou de blocage selon l'une quelconque des revendications précédentes, caractérisé en ce que la profondeur radiale maximale (T) des évidements (12a, 12b, 12c) est comprise entre la moitié et le tiers de la largeur radiale maximale (A) de la rondelle (10).

11. Écrou de blocage selon l'une quelconque des revendications précédentes, caractérisé en ce que les parois latérales (19) des évidements sont essentiellement radiales.

12. Écrou de blocage selon l'une quelconque des revendications précédentes, caractérisé en ce que les griffes (54a à 54c) sont traitées sur toute leur étendue circonférencielle et au moins sur une partie de leur étendue radiale pour avoir une élasticité accrue.

13. Écrou de blocage selon l'une quelconque des revendications précédentes, caractérisé en ce que la rondelle de blocage (10) est en un matériau élastique, notamment de l'acier à ressort.
